# FASCICULE DE BREVET EUROPEEN

(11) **EP 3 056 305 B1**
(45) Date de publication et mention de la délivrance du brevet: **04.10.2023**
(21) Numéro de dépôt: 16155162.7
(22) Date de dépôt: 11.02.2016
(51) Int. Cl.: B23B 35/00, B23C 3/00, B32B 3/06, B32B 3/26, B32B 5/02, B32B 7/06, B32B 7/08, B32B 7/12, B32B 15/04, B32B 27/06, B32B 38/00, B23P 15/00, B32B 38/04

(54) **PROCÉDÉ DE FABRICATION D'UNE PLURALITÉ DE CALES PELABLES**
HERSTELLUNGSVERFAHREN EINER VIELZAHL VON SCHÄLBAREN PASSELEMENTEN
METHOD FOR MANUFACTURING A PLURALITY OF PEELABLE SHIMS

(30) Priorité: 13.02.2015 FR 1551237
(43) Date de publication de la demande: 17.08.2016
(73) Titulaire: Gastel, Yann Maurice, 78760 Jouars Pontchartrain (FR)
(72) Inventeur: Gastel, Yann Maurice, 78760 Jouars Pontchartrain (FR)
(74) Mandataire: Lefevre-Groboillot, David André

(56) Documents cités:
- EP-A1- 2 248 661
- WO-A2-2014/199080
- FR-A1- 2 533 859
- US-A- 4 382 728

## Description

L'invention a trait à un procédé de fabrication de cales pelables.

On connait des cales pelables qui sont constituées d'une superposition de couches ou feuilles de matériau reliées entre elles par des surfaces d'adhésif, les résistances relatives des feuilles et des surfaces d'adhésif étant telles que les feuilles peuvent être pelées facilement une par une ou par groupes de plusieurs pour ajuster la dimension de la cale dans la direction perpendiculaire aux feuilles, qui est en général l'épaisseur de la cale.

Le document WO 2014/199080 A2 divulgue un procédé de fabrication d'une pluralité de cales pelables selon le préambule de la revendication 1.

Les cales pelables sont jusqu'ici fabriquées par une succession des étapes suivantes : empilement de vastes feuilles du matériau, enduites d'un précurseur de l'adhésif, passage à l'étuve et/ou sous pression pour durcir l'adhésif tout en obtenant le caractère pelable et en maintenant la géométrie de l'empilement, notamment le caractère parallèle des feuilles, ébauchage à l'aide d'une scie à ruban pour séparer la matière des différentes cales individuelles dans le brut obtenu, puis usinage, dans les ébauches, du contour de la cale pour définir la géométrie extérieure latérale précise de celle-ci.

L'usinage est effectué en maintenant la cale en compression à l'aide de vis insérées dans des alésages traversants pratiqués dans la surface de la cale, à proximité des bords à usiner. Le maintien en compression permet la conservation de la structure de la cale malgré l'action de l'outil d'usinage. Les vis ont un rôle d'arbre servant pour la compression de la cale perpendiculairement au plan des feuilles.

Les alésages sont préalablement formés, par forage à la perceuse, ébauche par ébauche ou par paquets d'ébauches, en maintenant sous pression l'ébauche individuellement sur sa périphérie latérale par des mors, des brides ou des étaux, mis en place sur sa périphérie latérale, en sorte de maintenir en compression la limite de chacun des trous au cours de leur perçage. Le maintien en compression permet la conservation de la structure de la cale malgré l'action du foret.

Cette méthodologie a fait ses preuves mais il est, de manière générale, souhaité de réduire les coûts de production et d'augmenter la productivité des chaînes de production.

### Définition de l'invention et avantages associés

À cette fin, l'invention propose un procédé de fabrication d'une pluralité de cales pelables selon la revendication 1, comprenant des étapes de perçage, pour chaque cale de la pluralité, d'au moins un trou traversant transversal aux feuilles d'un empilement pelable constituant la matière première pour la cale, alors qu'une première compression est appliquée transversalement aux feuilles pour favoriser un maintien structural sur la limite du trou pendant le perçage, dans lequel les étapes de perçage sont effectuées à l'aide d'un outil de perçage et compression sur l'empilement pelable qui est un empilement pelable brut constituant la matière première pour une pluralité de cales pelables, la première compression étant appliquée à l'aide dudit outil.

Grâce à ce procédé, la pose de brides ou étaux est limitée, puisque le perçage est effectué sur l'empilement brut, et que le maintien en pression est obtenu indépendamment de l'usage de brides ou étaux. Cela permet de gagner du temps et d'augmenter la productivité de l'atelier.

On précise que les étapes de formation d'un empilement de feuilles enduites d'un précurseur d'adhésif, et de durcissage, ainsi que les étapes de pose des arbres et d'usinage peuvent être mises en oeuvre dans un atelier distinct de l'atelier dans lequel sont effectuées les étapes de perçage.

Le procédé de l'invention comprend de plus des étapes de pose, pour chaque cale de la pluralité, d'au moins un arbre dans un trou transversal à l'empilement, et d'usinage du contour latéral de ladite cale alors que la cale reçoit une deuxième compression à l'aide du au moins un arbre pour favoriser son maintien structural sur le contour latéral pendant l'usinage, et dans lequel l'usinage du contour latéral est effectué sur l'empilement pelable brut pour extraire de l'empilement pelable brut les cales de la pluralité de cales.

Ainsi, avantageusement, l'usinage est effectué sur l'empilement pelable brut pour extraire de l'empilement pelable brut les cales de la pluralité de cales. Cela permet de gagner du temps et d'augmenter la productivité de l'atelier.

Préférentiellement, l'outil de perçage et compression approche l'empilement pelable brut sur une seule de ses faces pour appliquer la compression et percer, l'autre face étant retenue par un support.

Les étapes de perçage peuvent être effectuées pour toutes les cales de la pluralité de cales avant les étapes de pose d'arbres et d'usinage.

Les étapes de pose d'arbre et d'usinage peuvent être effectuées par un automate pour la pluralité de cales.

L'arbre peut être posé alors que l'empilement est placé entre deux plaques martyres, les deux plaques étant mises en compression avec l'empilement, en sorte de répartir la compression appliquée à l'aide de l'arbre.

L'arbre peut être la tige d'une vis, et que la compression est appliquée en vissant la vis dans une plaque taraudée, l'empilement brut étant disposé entre la plaque taraudée et la tête de la vis.

La première compression peut être appliquée à l'aide dudit outil sur une surface annulaire autour du trou qui est percé.

L'outil de perçage et compression peut approcher l'empilement pelable brut sur une seule de ses faces pour appliquer la compression et percer, l'autre face étant retenue par un support.

Les étapes de perçage peuvent être effectuées par un automate pour la pluralité de cales.

Des brides ou étaux peuvent appliquer une compression transversale sur la périphérie latérale de l'empilement pelable brut pendant l'étape de perçage.

Le procédé peut comprendre de plus une étape de formation d'un empilement de feuilles enduites d'un précurseur d'adhésif, puis une étape de durcissage dudit précurseur en sorte d'obtenir l'empilement pelable brut constituant la matière première pour la pluralité de cales pelables.

Le durcissage peut être conduit en appliquant une pression et de la chaleur.

Les feuilles peuvent être en métal, en polymère ou en fibres.

Les feuilles peuvent être maintenues entre elles par un adhésif qui peut être, par exemple, une résine époxy, phénolique, vinyl-ester ou polyvinylique, ou encore un autre type d'adhésif.

L'invention va maintenant être décrite en relation avec les figures annexées.

### Liste des figures

La figure 1 présente une cale pelable.
Les figures 2 et 3 présentent des étapes d'un procédé de fabrication de cales pelables.
Les figures 4 à 8 présentent des étapes d'un procédé de fabrication de cales pelables selon l'art antérieur.
Les figures 9 à 14 présentent des étapes d'un procédé de fabrication d'une pluralité de cales pelables selon l'invention.
La figure 15 représente une variante de réalisation de l'étape présentée en figure 5.

### Description d'un mode de réalisation de l'invention

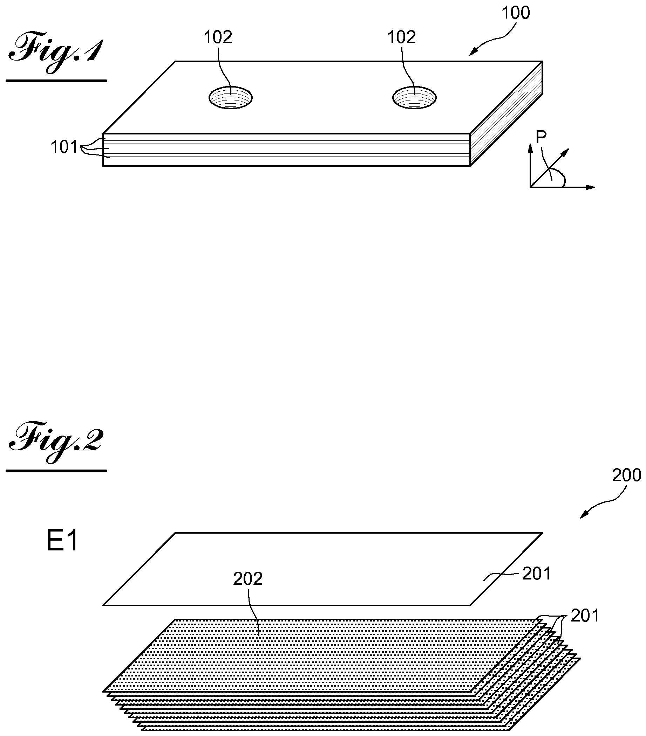

En figure 1, on a représenté une cale pelable plane 100. La cale 100 est un objet admettant un plan principal P et constituée d'un empilement de feuilles 101 parallèles les unes aux autres, parallèles au plan, et reliées entre elles par un adhésif présent entre les surfaces de deux feuilles adjacentes en quantités très faibles.

Le matériau des feuilles peut être un matériau métallique, comme de l'acier inoxydable, de l'aluminium, du laiton ou du titane. Dans ce cas, les feuilles sont continues et pleines. Le matériau peut aussi être basé sur un polymère formant des feuilles continues et pleines. Le matériau peut aussi être constitué de nappes de fibres, par exemple des fibres tissées, comme les fibres de verre ou les fibres de carbone. Dans le cas des nappes de fibres, l'adhésif est généralement présent dans les interstices de la nappe, créant une continuité entre la surface d'adhésif reliant une feuille à la feuille supérieure et la surface d'adhésif reliant la feuille à la feuille inférieure.

L'adhésif est par exemple une résine epoxy, phénolique, vinyl-ester ou polyvinylique, mais d'autres matières peuvent être utilisées.

Dans l'exemple représenté en figure 1, la cale a quatre bords droits et une forme rectangle dans son plan. D'autres géométries sont envisageables compris des géométries concaves ou convexes.

La cale pelable 100 est remarquable tout d'abord en ce que, dans la gamme de température pour laquelle elle est conçue, elle est solide face aux efforts en compression et peut donc servir de cale dans un montage mécanique, entre deux pièces subissant des contraintes transversales, notamment perpendiculaires, au plan de la cale.

Elle est également remarquable en ce que, à une gamme de température à laquelle elle doit être manipulée, elle est aisément pelable, ou délitable, par action de la main ou d'un petit outil séparant une ou plusieurs feuilles de matériau du reste de la cale tour d'abord au bord, puis par traction par exemple à la main sur la ou les feuilles séparées, sur toute la superficie du reste de la cale.

Ainsi, une cale d'épaisseur adaptée peut être préparée à la température de manipulation, typiquement la température ambiante, qui est celle d'un atelier mécanique, à partir de la cale 100 initiale.

La cale d'épaisseur adaptée peut être utilisée ensuite sur un montage qui subit des variations de température dans la gamme de température pour laquelle la cale 100 est prévue, qui peut être plus ou moins vaste en fonction des matériaux utilisés, et qui généralement englobe des températures élevées, comme celles qui surviennent à proximité d'un moteur à combustion ou dans un mécanisme produisant de la chaleur du fait de frottements, par exemple.

De manière remarquable, une cale 100 telle que présentée comporte parfois des alésages ou trous 102, traversants, dont la géométrie est celle d'un cylindre droit, et qui sont perpendiculaires au plan P, et donc débouchent sur les faces supérieures et inférieures de la cale. Ces trous 102 sont notamment liés au mode de fabrication de la cale.

En **figure 2****,** on a représenté des étapes préliminaires d'un procédé de fabrication de cales pelables planes. Ces étapes peuvent être mises en oeuvre dans le cadre de l'invention, mais également avec un procédé antérieur.

Une première étape E1 consiste en la superposition de grandes feuilles 201 du matériau choisi pour les cales 100, généralement rectangulaires. Les feuilles sont positionnées les unes sur les autres, encollées par exemple sur une face avec un précurseur 202 de l'adhésif, qui généralement est un monomère à polymériser par chauffage, mise sous pression, ou encore activation chimique. Elles forment un empilement 200.

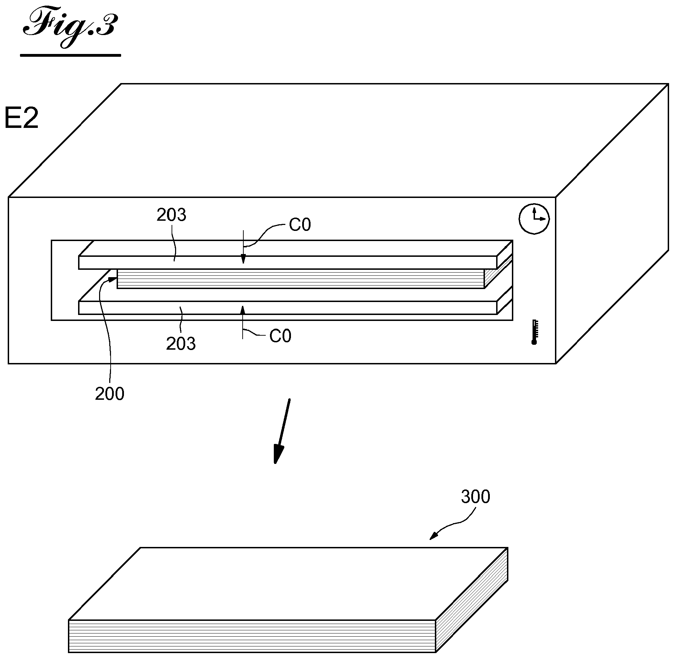

En **figure 3****,** l'empilement 200 de feuilles 201 sont ensuite mis sous pression (compression C0) entre deux plaques 203. Des brides, mors ou étaux peuvent être utilisés sur la périphérie latérale de l'empilement pour assurer la compression C0, en prenant en étaux les plaques 203, qui permettent d'uniformiser la pression sur la surface des feuilles. D'autres méthodes d'application de cette compression C0 peuvent être utilisées, comme par exemple l'application d'une presse sur la majeure surface des plaques 203.

La polymérisation est obtenue au cours d'une étape E2, soit par une attente prolongée, soit par un passage à l'étuve à des températures propres à provoquer la polymérisation. La compression C0 est avantageuse, car en plus de son rôle d'activation, elle permet de maintenir l'empilement plan malgré la réaction chimique et éventuellement les effets de la température pendant le passage à l'étuve.

La nature et la quantité de l'adhésif, ainsi que les conditions du durcissement de l'adhésif sont adaptées, par des essais préalables, pour que l'empilement obtenu soit à la fois pelable pour permettre l'adaptation de son épaisseur, et solide pour assumer sa fonction de cale.

L'empilement pelable obtenu, qualifié d'empilement brut 300, a une forme rectangulaire, et est de grande dimension. Il constitue la matière première pour un grand nombre de cales, par exemple 80 cales qui peuvent être disposées en 4 lignes de 20 colonnes.

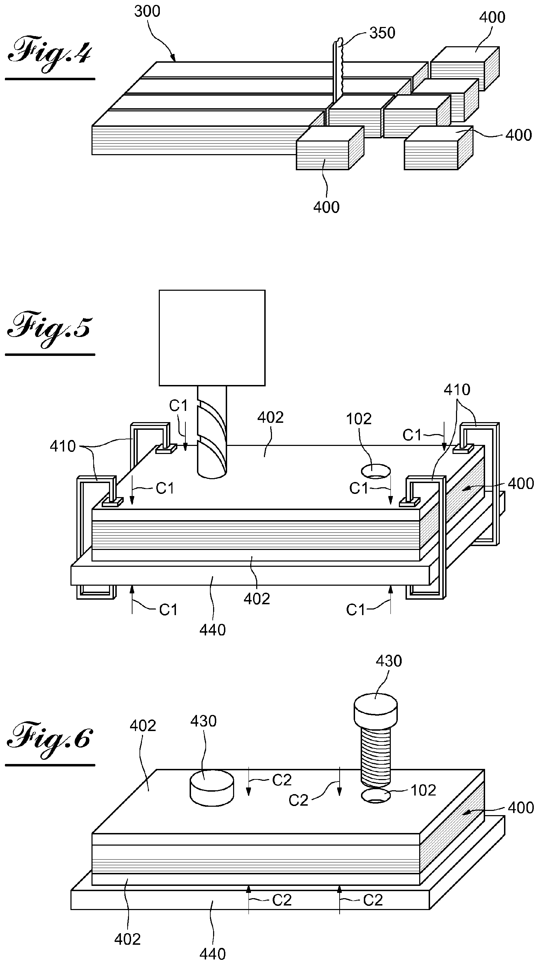

En **figure 4****,** on a représenté une étape d'un procédé de fabrication de cales pelables à partir de l'empilement brut 300 évoqué, et antérieur à l'invention.

Cette étape consiste en la découpe de l'empilement brut 300, transversalement au plan des feuilles, à l'aide d'une scie à ruban 350, de manière à former des petits rectangles d'empilement pelable, par exemple, dans l'exemple évoqué, au nombre de 80. Typiquement, ces rectangles sont identiques les uns aux autres. Ils constituent chacun une ébauche 400 dont les bords sont à au moins 3 mm des cotes exactes de la cale finale.

En **figure 5****,** on a représenté l'étape suivante du procédé antérieur, qui consiste en la mise en place de cales martyres 402 de part et d'autre de l'ébauche 400, parallèlement à et le long des feuilles de matériaux les plus à l'extérieur, puis en la mise en place de l'empilement en résultant sur un support 440, par exemple en aluminium.

Le procédé est poursuivi par la pose de brides ou d'étaux 410 sur la périphérie latérale de l'ébauche 400 (par exemple sur deux côtés, ou sur les quatre côtés), cales martyres 402 et support 440 inclus dans les mâchoires des étaux, comme représenté en figure 5.

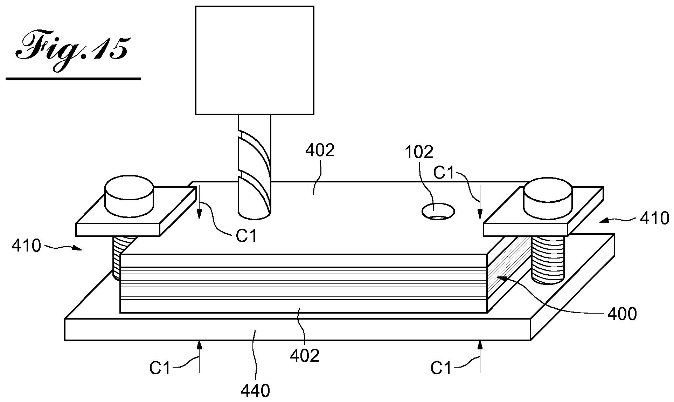

Alternativement, comme représenté en **figure 15****,** un support comprenant des alésages taraudés est utilisé, les taraudages servant à la pose de vis permettant la mise en compression sur les bords de l'empilement. Chaque vis ne traverse pas l'empilement mais est extérieure à celui-ci et permet la compression à l'aide d'une plaque rapportée associée à la vis, formant avec le support 40 la deuxième partie de la mâchoire de l'étau 410.

Les brides ou étaux 410 permettent d'appliquer une compression C1 perpendiculairement au plan des feuilles de l'empilement. Les cales martyres 402 répartissent la pression sur la surface de l'empilement pelable 400.

Le procédé antérieur se poursuit alors par le perçage de trous (ou alésages) 102 transversalement au plan des feuilles, à travers l'empilement et les cales martyres 402, à l'aide d'un foret, généralement unique, qui perce les alésages les uns après les autres.

Compte tenu de la faible dimension de l'ébauche 400, adaptée à la réalisation d'une unique cale individuelle, et du positionnement des trous 102 à proximité des contours de l'ébauche sur lesquels sont fixés les brides, la compression C1 permet de maintenir en compression la zone de l'empilement où les trous 102 sont percés et d'éviter une perte de cohésion et de structure de l'empilement dans le pourtour des trous, lors de l'action du foret.

En **figure 6****,** l'étape suivante du procédé antérieur est représentée. Elle consiste en la pose de vis 430 dans les trous 102, en prenant en étau également les cales martyres 402 toujours en place. Les vis peuvent être vissées dans le support 440 qui présente des taraudages, de préférence des taraudages débouchants. Ainsi l'empilement 400 et les cales martyres 402 sont pris en étau entre les têtes de vis et le support. Les vis 430 permettent d'appliquer une compression C2 sur l'empilement à partir de la zone des trous, cette compression étant de plus répartie sur la surface à l'aide des cales martyres 402.

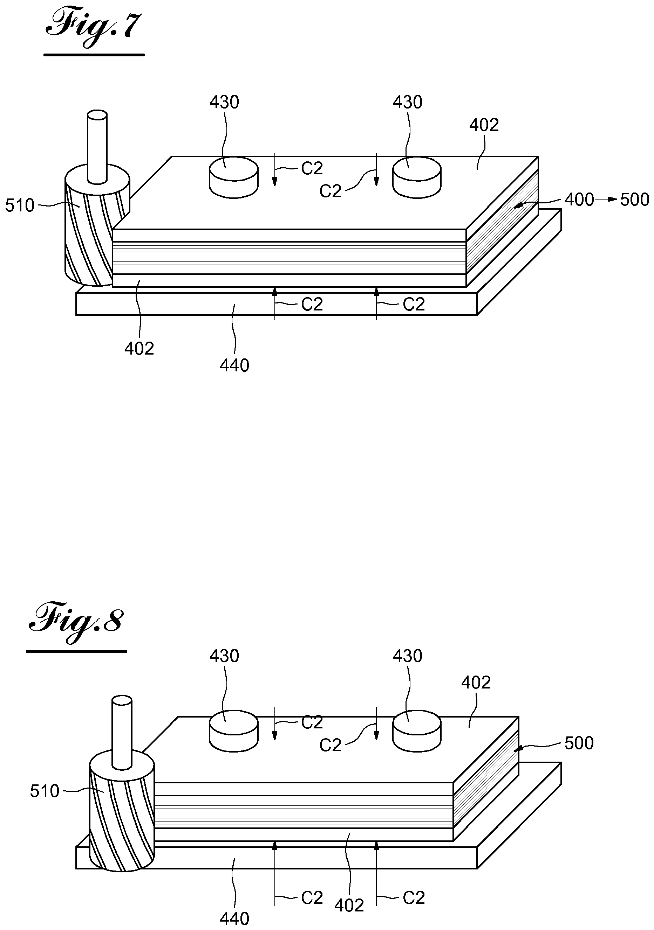

En **figures 7 et 8****,** on voit l'étape de fraisage du contour précis de la cale 500, à partir de l'ébauche 400, au cours de laquelle la matière excessive de la cale est supprimée à l'aide d'un centre d'usinage vertical ou une autre machine d'usinage, équipé d'une fraise 510 en rotation autour d'un axe par exemple perpendiculaire au plan de l'empilement.

Du fait de la compression C2 appliquée, par les vis 430, à une distance faible du contour qui est défini progressivement par la fraise 510, on évite une perte de cohésion et de structure de l'empilement sur la périphérie latérale de la cale 500 qui fait l'objet de l'usinage.

L'usinage est mené, par exemple, pour définir quatre côtés droits et une forme d'ensemble rectangle, comme évoqué en relation avec la figure 1, ou pour définir une autre forme, suivant la destination de la cale.

Une fois l'usinage achevé, les vis 430 sont supprimés et les cales martyres 402 écartées, et la cale 500 est obtenue. Elle a par exemple la structure de la cale 100 représentée en figure 1.

Ce procédé antérieur a fait l'objet d'un perfectionnement qui va être décrit maintenant.

Un procédé selon l'invention est présenté ensuite en relation avec les figures suivantes.

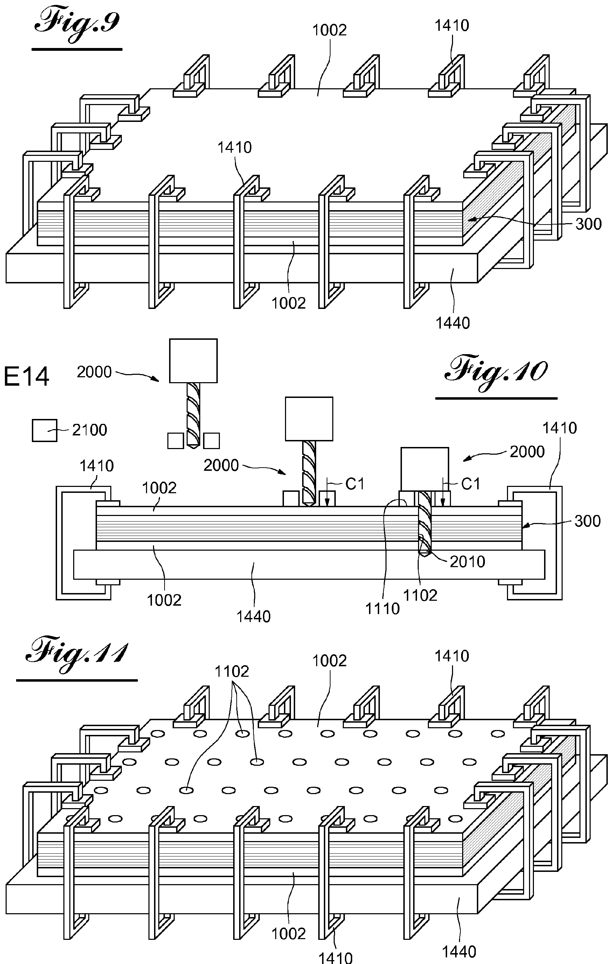

En **figure 9****,** on a représenté l'empilement brut 300, de grande taille, obtenu à l'issue de l'étape de durcissement de l'adhésif décrite en relation avec la figure 3, auquel on applique, perpendiculairement au plan de l'empilement des brides ou des étaux 1410 en périphérie latérale, avec interposition, des deux côtés, de plaques martyres 1002 de dimensions dans le plan similaires à celles de l'empilement brut 300, et sur la face inférieure, d'un support 1440 à nouveau de dimensions dans le plan similaires à celles de l'empilement brut 300.

En **figure 10****,** on a représenté l'étape suivante du mode de réalisation du procédé, consistant à percer l'empilement brut 300, sur un centre d'usinage, avec un canon de compression et perçage 2000, piloté de manière automatique par une unité de contrôle 2100.

Le canon de compression et perçage 2000 applique, pour chaque trou ou alésage 1102 à forer, une compression C1 sur l'une des plaques martyres 1002, appelée par la suite plaque supérieure, perpendiculairement au plan de l'empilement, sur une surface 1110, par exemple annulaire, entourant une zone qui est simultanément percée par le foret 2010 du centre d'usinage. A l'opposé du canon de compression, le support 1440 maintient l'empilement 300, en retenant la plaque martyre 1002 inférieure face à la pression exercée par le canon 2000.

Les trous 1102 sont par conséquent effectués avec l'application, localement, d'une compression qui permet d'éviter, lors de la pénétration du foret 2010, que l'empilement autour du trou 1102, à proximité de la matière attaquée par le foret 2010, ne perde sa cohésion et sa structure du fait des efforts appliqués par le foret 2010. Le foret est par exemple un foret unique, qui perce les alésages les uns après les autres, et qui est déplacé entre deux trous. L'unité de contrôle 2100 permet d'ajuster la force de la compression C1. En effet, il est utile, en fonction des matériaux choisis pour les feuilles de l'empilement pelable d'ajuster la force de la compression C1, pour définir le contour de chaque cale individuelle tout en préservant l'empilement et sa structure.

En **figure 11****,** on a représenté le résultat : par exemple, les trous sont percés de manière régulière, ou du moins pour obtenir la bonne disposition des trous 1102 dans les cales qu'il est prévu de découper dans l'empilement brut 300.

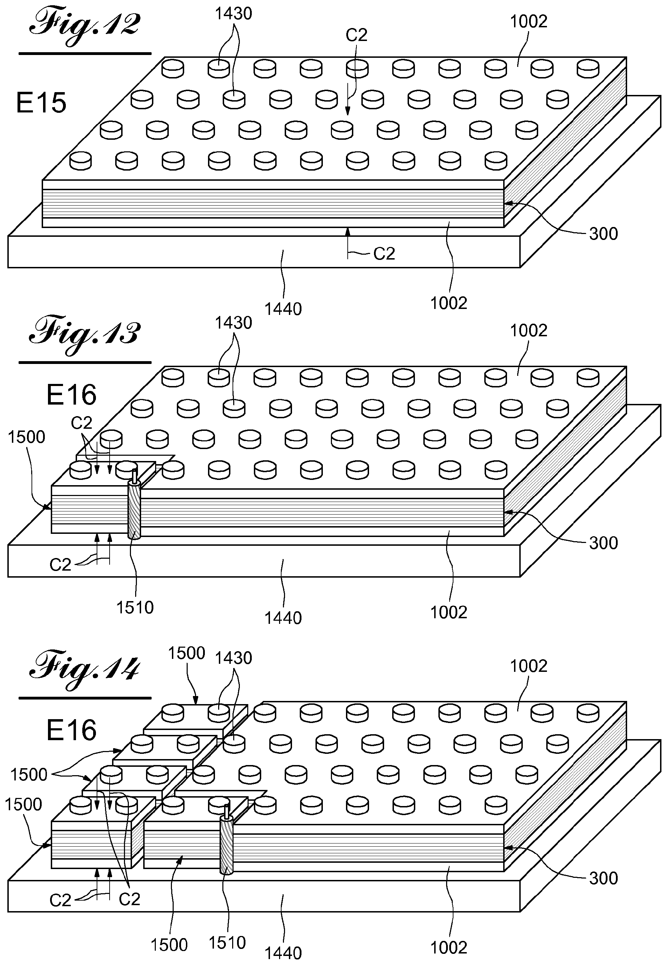

En **figure 12****,** on a représenté l'étape suivante du mode de réalisation, au cours de laquelle sont mis en place des vis 1430, vissées dans des taraudages du support taraudé 1440, permettant la prise en étau des plaques martyres 1002 supérieures et inférieures et de l'empilement brut 300.

A la place du support 1440, qui est avantageux puisque facile à utiliser, des écrous peuvent éventuellement être utilisés.

Les vis 1430 sont placées par un automate et mises en place, par exemple, dans tous les trous 1102 forés lors de l'étape précédente. Ces vis permettent l'application d'une compression C2, sur toute la surface de l'empilement brut 300. Les brides 1410 mises en place lors de l'étape précédente peuvent être supprimées. Les plaques 1002 permettent de répartir la pression autour des vis.

En **figures 13 et 14****,** on a représenté l'étape suivante du mode de réalisation du procédé selon l'invention, au cours de laquelle une fraise 1510 de centre d'usinage est mise en oeuvre pour usiner le contour d'une première cale dans la matière de l'empilement brut 300, autour des vis correspondant à la matière qui est utilisée pour former la cale pelable individuelle 1500.

Ainsi, dans l'exemple de géométrie de cale pelable qui a été présenté en figure 1, la cale est percée de deux trous, car deux trous sont suffisants pour appliquer une compression à une distance suffisante de l'ensemble du contour de la cale pour obtenir sur ce l'ensemble de contour l'effet de protection contre la perte de structure et de cohésion obtenu grâce à la compression.

Mais en fonction de la géométrie de la cale à extraire, le nombre de trous et leurs positionnements vis-à-vis des bords à usiner sont adaptés.

Le déplacement de la fraise est piloté, en sorte d'obtenir le contour de la cale tel que prévu dans le cahier des charges.

L'invention n'est pas limitée au mode de réalisation présenté mais s'étend à toutes les variantes dans le cadre de la portée des revendications.

## Revendications

1. Procédé de fabrication d'une pluralité de cales pelables, comprenant des étapes de perçage (E14), pour chaque cale donnée de ladite pluralité, d'au moins un trou (1102) traversant transversal aux feuilles (201) d'un empilement pelable (300) de feuilles constituant la matière première pour ladite cale donnée, alors qu'une première compression (C1) est appliquée transversalement aux feuilles (201) pour favoriser un maintien structural sur la limite dudit trou (1102) pendant le perçage, le procédé comprenant de plus des étapes de pose (E15), pour chaque cale de la pluralité, d'au moins un arbre (1430) dans au moins ledit trou (1102) transversalement à l'empilement (300), et d'usinage (E16) du contour latéral de ladite cale alors que la cale reçoit une deuxième compression (C2) à l'aide de l'arbre (1430) pour favoriser son maintien structural sur le contour latéral pendant l'usinage, **caractérisé en ce que** les étapes de perçage (E14) sont effectuées à l'aide d'un outil de perçage et compression (2000) sur l'empilement pelable (300) qui est un empilement pelable brut (300) constituant la matière première pour les cales pelables de ladite pluralité, la première compression (C1) étant appliquée à l'aide dudit outil (2000), l'usinage (E16) du contour latéral étant effectué sur l'empilement pelable brut (300) pour extraire de l'empilement pelable brut les cales de la pluralité de cales.

2. Procédé de fabrication selon la revendication 1, dans lequel les étapes de perçage (E14) sont effectuées pour toutes les cales de la pluralité de cales avant les étapes de pose (E15) d'arbres et d'usinage (E16).

3. Procédé de fabrication selon la revendication 1 ou la revendication 2, la première compression (C1) étant appliquée à l'aide dudit outil (2000) sur une surface annulaire (1110) autour du trou (1102) qui est percé.

4. Procédé de fabrication selon l'une des revendications 1 à 3, dans lequel l'outil de perçage et compression (2000) approche l'empilement pelable brut sur une seule de ses faces pour appliquer la compression et percer, l'autre face étant retenue par un support (1440).

5. Procédé de fabrication selon l'une des revendications 1 à 4, dans lequel les étapes de pose d'arbre (E15) et d'usinage (E16) sont effectuées par un automate pour la pluralité de cales.

6. Procédé de fabrication selon l'une des revendications 1 à 5, dans lequel l'arbre (1430) est posé alors que l'empilement est placé entre deux plaques martyres (1002), les deux plaques étant mises en compression (C2) avec l'empilement, en sorte de répartir la compression appliquée à l'aide de l'arbre (1430).

7. Procédé de fabrication selon l'une des revendications 1 à 6, dans lequel l'arbre (1430) est la tige d'une vis (1430), et que la compression (C2) est appliquée en vissant la vis (1430) dans une plaque taraudée (440), l'empilement brut (300) étant disposé entre la plaque taraudée (1440) et la tête de la vis (1430).

8. Procédé de fabrication selon l'une des revendications 1 à 7, dans lequel les étapes de perçage (E14) sont effectuées par un automate (2100) pour la pluralité de cales.

9. Procédé de fabrication selon l'une des revendications 1 à 8, dans lequel des brides ou étaux (410) appliquent une pression sur la périphérie latérale de l'empilement pelable brut (300) pendant l'étape de perçage (E14).

10. Procédé de fabrication selon l'une des revendications 1 à 9, comprenant de plus une étape de formation (E1) d'un empilement de feuilles (201) enduites d'un précurseur d'adhésif, puis une étape de durcissage (E2) dudit précurseur en sorte d'obtenir l'empilement pelable brut (300) constituant la matière première pour la pluralité de cales pelables.

11. Procédé de fabrication selon la revendication 10, dans lequel le durcissage est conduit en appliquant une pression et de la chaleur.

12. Procédé de fabrication selon l'une des revendications 1 à 11, dans lequel les feuilles sont en métal, en polymère ou en fibres.

13. Procédé de fabrication selon l'une des revendications 1 à 12, dans lequel les feuilles sont maintenues entre elles par un adhésif qui est une résine époxy, phénolique, vinyl-ester ou polyvinylique.

## Patentansprüche

1. Verfahren zur Herstellung einer Vielzahl schälbarer Passelemente, umfassend Bohrschritte (E14) für jedes gegebene Passelement der Vielzahl von mindestens einem Loch (1102), das die Bögen (201) eines schälbaren Bogenstapels (300), der das Ausgangsmaterial für das gegebene Passelement darstellt, quer durchquert, während eine erste Kompression (C1) quer auf die Bögen (201) angewendet wird, um einen strukturellen Halt auf der Grenze des Lochs (1102) während des Bohrens zu fördern, wobei das Verfahren zusätzlich die Schritte des Einsetzens (E15), für jedes Passelement von der Vielzahl, mindestens einer Welle (1430) in mindestens das Loch (1102) quer zum Stapel (300) und des Bearbeitens (E16) der seitlichen Kontur des Passelements umfasst, während das Passelement eine zweite Kompression (C2) mit Hilfe der Welle (1430) erhält, um seinen strukturellen Halt auf der seitlichen Kontur während des Bearbeitens zu fördern, **dadurch gekennzeichnet, dass** die Bohrschritte (E14) mit Hilfe eines Bohr- und Kompressionswerkzeugs (2000) auf dem schälbaren Stapel (300) durchgeführt werden, der ein unbearbeiteter schälbarer Stapel (300) ist, der das Ausgangsmaterial für die schälbaren Passelemente der Vielzahl bildet, wobei die erste Kompression (C1) mit Hilfe des Werkzeugs (2000) angewendet wird, wobei die Bearbeitung (E16) der seitlichen Kontur auf dem unbearbeiteten schälbaren Stapel (300) durchgeführt wird, um aus dem unbearbeiteten schälbaren Stapel die Passelemente der Vielzahl von Passelementen zu entnehmen.

2. Herstellungsverfahren nach Anspruch 1, wobei die Bohrschritte (E14) für alle Passelemente der Vielzahl von Passelementen vor den Schritten des Einsetzens (E15) von Wellen und des Bearbeitens (E16) durchgeführt werden.

3. Herstellungsverfahren nach Anspruch 1 oder Anspruch 2, wobei die erste Kompression (C1) mit Hilfe des Werkzeugs (2000) auf eine ringförmige Oberfläche (1110) um das gebohrte Loch (1102) herum angewendet wird.

4. Herstellungsverfahren nach einem der Ansprüche 1 bis 3, wobei sich das Bohr- und Kompressionswerkzeug (2000) dem unbearbeiteten schälbaren Stapel auf einer einzigen seiner Flächen annähert, um die Kompression anzuwenden und zu bohren, wobei die andere Fläche von einem Träger (1440) gehalten wird.

5. Herstellungsverfahren nach einem der Ansprüche 1 bis 4, wobei die Schritte des Einsetzens der Welle (E15) und des Bearbeitens (E16) für die Vielzahl von Passelementen von einem Automaten durchgeführt werden.

6. Herstellungsverfahren nach einem der Ansprüche 1 bis 5, wobei die Welle (1430) eingesetzt wird, während der Stapel zwischen zwei Opferplatten (1002) platziert ist, wobei die zwei Platten mit dem Stapel komprimiert (C2) werden, so dass die mit Hilfe der Welle (1430) angewendete Kompression verteilt wird.

7. Herstellungsverfahren nach einem der Ansprüche 1 bis 6, wobei die Welle (1430) der Schaft einer Schraube (1430) ist und dass die Kompression (C2) durch Schrauben der Schraube (1430) in eine Gewindeplatte (440) angewendet wird, wobei der unbearbeitete Stapel (300) zwischen der Gewindeplatte (1440) und dem Kopf der Schraube (1430) angeordnet ist.

8. Herstellungsverfahren nach einem der Ansprüche 1 bis 7, wobei die Bohrschritte (E14) für die Vielzahl von Passelementen von einem Automaten (2100) durchgeführt werden.

9. Herstellungsverfahren nach einem der Ansprüche 1 bis 8, wobei die Flansche oder Klemmen (410) während des Bohrschritts (E14) einen Druck auf die seitliche Peripherie des unbearbeiteten schälbaren Stapels (300) ausüben.

10. Herstellungsverfahren nach einem der Ansprüche 1 bis 9, umfassend zusätzlich einen Schritt des Bildens (E1) eines Stapels aus Bögen (201), die mit einem Haftvorläufer beschichtet sind, dann einen Schritt des Härtens (E2) des Vorläufers, so dass der unbearbeitete schälbare Stapel (300) erhalten wird, der das Ausgangsmaterial für die Vielzahl schälbarer Passelemente darstellt.

11. Herstellungsverfahren nach Anspruch 10, wobei das Härten durch Anwenden eines Drucks und von Wärme durchgeführt wird.

12. Herstellungsverfahren nach einem der Ansprüche 1 bis 11, wobei die Bögen aus Metall, aus Polymer oder aus Fasern sind.

13. Herstellungsverfahren nach einem der Ansprüche 1 bis 12, wobei die Bögen untereinander von einen Haftstoff gehalten werden, der ein Epoxy-, Phenol-, Vinylester- oder Polyvinylharz ist.

## Claims

1. A method of manufacturing a plurality of peelable shims, comprising steps of drilling (E14), for each given shim of said plurality, at least one through hole (1102) transverse to the sheets (201) of a peelable stack (300) of sheets making up the raw material for said given shim, whereas a first compression (C1) is applied transversely to the sheets (201) to favor structural maintenance on the boundary of said hole (1102) during the drilling, the method also comprising steps of placement (E15), for each shim of the plurality, of at least one shaft (1430) in at least said hole (1102) transversely to the stack (300), and of machining (E16) of the lateral contour of said shim whereas the shim receives a second compression (C2) using the shaft (1430) to favor structural maintenance thereof on the lateral contour during the machining, **characterized in that** the drilling steps (E14) are carried out using a drilling and compression tool (2000) on the peelable stack (300), which is a raw peelable stack (300) making up the raw material for the peelable shims of said plurality, the first compression (C1) being applied using said tool (2000), the machining (E16) of the lateral contour being done on the raw peelable stack (300) to extract the shims of the plurality of shims from the raw peelable stack.

2. The manufacturing method according to claim 1, wherein the drilling steps (E14) are carried out for all the shims of the plurality of shims before the shaft placement (E15) and machining (E16) steps.

3. The manufacturing method according to claim 1 or claim 2, the first compression (C1) being applied using said tool (2000) on an annular surface (1110) around the hole (1102) that is drilled.

4. The manufacturing method according to one of claims 1 to 3, wherein the drilling and compression tool (2000) approaches the raw peelable stack on only one of its faces to apply the compression and to drill, the other face being retained by a support (1440).

5. The manufacturing method according to one of claims 1 to 4, wherein the shaft placement (E15) and machining (E16) steps are carried out by an automaton for the plurality of shims.

6. The manufacturing method according to one of claims 1 to 5, wherein the shaft (1430) is placed while the stack is positioned between two sacrificial plates (1002), the two plates being compressed (C2) with the stack, so as to distribute the compression applied using the shaft (1430).

7. The manufacturing method according to one of claims 1 to 6, wherein the shaft (1430) is the shaft of a screw (1430), and the compression (C2) is applied by screwing the screw (1430) in a tapped plate (440), the raw stack (300) being arranged between the tapped plate (1440) and the head of the screw (1430).

8. The manufacturing method according to one of claims 1 to 7, wherein the drilling steps (E14) are carried out by an automaton (2100) for the plurality of shims.

9. The manufacturing method according to one of claims 1 to 8, wherein flanges or vises (410) apply pressure on the lateral periphery of the raw peelable stack (300) during the drilling step (E14).

10. The manufacturing method according to one of claims 1 to 9, further comprising a step of forming (E1) a stack of sheets (201) coated with an adhesive precursor, then a step of curing (E2) said precursor so as to obtain the raw peelable stack (300) making up the raw material for the plurality of peelable shims.

11. The manufacturing method according to claim 10, wherein the curing is conducted by applying pressure and heat.

12. The manufacturing method according to one of claims 1 to 11, wherein the sheets are made from metal, polymer or fibers.

13. The manufacturing method according to one of claims 1 to 12, wherein the sheets are maintained relative to one another by an adhesive that is an epoxy, phenolic, vinyl-ester or polyvinyl resin.
